# EUROPÄISCHE PATENTSCHRIFT

(11) **EP 1 623 619 B1**
(45) Veröffentlichungstag und Bekanntmachung des Hinweises auf die Patenterteilung: **17.06.2009**
(21) Anmeldenummer: 03773368.0
(22) Anmeldetag: 17.11.2003
(51) Int. Cl.: A01F 15/07

(54) **VORRICHTUNG ZUR FORMUNG EINES BALLENS AUS GEMÄHTER VEGETATION**
DEVICE FOR FORMING A MOWED VEGETATION BOLT
PROCEDE POUR FORMER UN ROULEAU DE MASSE VEGETALE FAUCHEE

(30) Priorität: 31.01.2003 EA 200300310
(43) Veröffentlichungstag der Anmeldung: 08.02.2006
(73) Patentinhaber: Shaplyko, Valerij Ivanovich, 220035 Minsk (BY); Mesropian, Georgij Arkadievich, 220108 Minsk (BY)
(72) Erfinder: SHAPLYKO, Valerij Ivanovich, Minsk, 220035 (BY); SHAPLYKO, Pavel Valerievich, Minsk, 220022 (BY); KARKANITSA, Alexander Nikolaevich, Minsk, 220012 (BY)
(74) Vertreter: Patentanwälte Zellentin & Partner
(86) Internationale Anmeldenummer: PCT/BY2003/000014
(87) Internationale Veröffentlichungsnummer: WO 2004/066713

(56) Entgegenhaltungen:
- DE-A1- 3 630 801
- DE-A1- 4 012 753
- GB-A- 1 578 401
- GB-A- 2 150 492
- SU-A- 942 572
- SU-A1- 1 428 277
- SU-A1- 1 692 361
- US-A- 4 172 355
- US-A- 5 349 806
- US-A- 5 855 109

## Beschreibung

### TECHNISCHES GEBIET DER ERFINDUNG

Die Erfindung betrifft Vorrichtungen zur Bildung zylindrischer Ballen durch Aufwickeln und Pressen, insbesondere zur Bildung eines Rundballens aus gemähtem pflanzlichen Gut, und kann in Heuerntemaschinen und -komplexen eingesetzt werden.

In der letzten Zeit ist es weltweit üblich geworden, Rauhfutter (Heu, Stroh) in großen Rundballen bereitzustellen. Der Vorteil dieser Technik besteht darin, dass bei hoher Produktivität und niedrigem Aufwand alle technologischen Prozesse der Verarbeitung des Futters vollständig mechanisiert werden können. Die wesentliche Vorrichtung zur Verarbeitung des Futters ist bei dieser Technologie die Rundballenpresse. Es existieren verschiedene Typen von Rundballenpressen, je nach Ort der Herstellung des Rundballens aus dem gemähten Gut, Ausbildungsform der Presskammer und Art des Pressmechanismus. Anfänglich wurden in den Rundballenpressen Pressmechanismen mit Riemenantrieb verwendet. In letzter Zeit werden diese jedoch immer häufiger durch Pressmechanismen mit Kettenantrieb ersetzt, da diese langlebiger und zuverlässiger sind.

Bekannt sind Konstruktionen von Vorrichtungen zur Bildung eines Rundballens aus gemähtem pflanzlichen Gut, enthaltend Mittel zur Bildung einer Bahn aus dem bearbeiteten Gut, die als Aufsammler und Walzensystem ausgebildet sind, und Mittel zur Bildung des Rundballens aus der Bahn, wobei letztere Mittel als in einer Presskammer angeordneter Pressmechanismus ausgebildet sind (s. A. V. Klochkov, N. V. Chaychits, V. P. Buyashov, "Selskokhozyaystvennye mashiny" ("Landwirtschaftliche Maschinen"), Minsk, Vlg. "Uradzhay", 1997, S. 290, 291 und V. I. Osobov, G. K. Vasilyev, "Senouborochnye mashiny i kompleksy" ("Heuerntemaschinen und -komplexe"), Moskau, Vlg. "Mashinostroyeniye", 1983, S. 111, Abb. 53). Der Pressmechanismus stellt einen Kettenförderer dar, der durch ein System sonderangefertigter Kettenräder in einer Führung angetrieben wird. Die Verwendung sonderangefertigter Kettenräder ist auf Grund der Konstruktionsbesonderheiten der verwendeten Mittel zur Befestigung der Betätigungsglieder, nämlich der Presswalzen, an den Ketten des Förderers erforderlich. Spezielle Aussparungen, die in standardmäßigen Kettenrädern zusätzlich ausgebildet wurden, dienen an den Befestigungsstellen der Betätigungsglieder dem ungehinderten Passieren der Kette über die Kettenräder. Trotz der im Vergleich zu Riemen-Pressmechanismen längeren Lebensdauer und höheren Zuverlässigkeit entspricht doch eine solche Konstruktion des Pressmechanismus - und damit der Vorrichtung zur Bildung eines Rundballens aus gemähtem pflanzlichen Gut insgesamt - nicht dem für landwirtschaftliche Technik erforderlichen Qualitätsstandard und bietet nicht die erforderliche Zuverlässigkeit, u.a. auch auf Grund der Verwendung sonderangefertigter Teile in der Bewegungsübertragung. Die spezielle Ausbildung der Kettenräder und die Konstruktion der Befestigungsmittel setzen eine unbedingte Einhaltung der Abstandsverhältnisse der Anordnung der Betätigungsglieder an der Kette voraus. Eine Störung der Funktion des Kettentriebes kann dabei zum Verkeilen und infolge dessen zu Bruch und/oder Zerstörung von Teilen des Antriebes führen. Während des Betriebes setzen Teile des pflanzlichen Guts die Kettenräder zu, was ebenfalls zum Ausfall und schließlich zum Bruch führen kann. Außerdem ist der Geräuschpegel des Mechanismus beim Betrieb hoch.

Der vorgeschlagenen technischen Lösung in Bezug auf die Gesamtheit der technischen Merkmale am nächsten kommt die riemenlose Rundballenmaschine des Typs PR-F-750 der Firma "Bobruyskagromash", die ebenfalls Mittel zur Bildung einer Bahn aus bearbeitetem Gut und ein Mittel zur Bildung eines Rundballens aus der Bahn enthält (s. "Press-podborshchiki rulonnye PR-F-750, PR-F-180" ("Rundballenpressen PR-F-750, PR-F-180", Teilekatalog der Fa. "Bobruyskagromash", Minsk, Vlg. "Klich", 1998, S. 14). In diesem Falle umfasst das Mittel zur Bildung eines Rundballens aus der Bahn aus gemähtem pflanzlichen Gut (Pressmechanismus) ein Paar paralleler Endlosketten, welche jeweils aus Gliedern ausgeführt sind, die aus einem Axialteil und einem Verbindungsteil bestehen, sowie ein zwischen den Ketten des Kettenpaars angeordnetes Betätigungsglied. Das Endloskettenpaar ist dabei mit einem Bewegungsmittel, das als sonderangefertigte Kettenräder ausgebildet ist, und mit einem Mittel zur Vorgabe der Bewegungsbahn, das an den Stirnseiten der Presskammern angeordnete Führungen sowie Fördermittel enthält, in Wirkzusammenhang bringbar angeordnet. Die Fördermittel sind in diesem Falle als Rollen ausgebildet, die an der äußeren Strinseite der Kette so angeordnet sind, dass die Rollenachse in der Ebene der Achse der Kette liegt. Das Betätigungsglied ist über Verbindungseinrichtungen mit einander gegenüberliegenden Abschnitten der Ketten des Kettenpaars verbunden, wobei die Verbindungseinrichtungen ein Gehäuse mit einem Mittel zur Kopplung mit einem Teil des Kettenglieds enthalten und das Bewegungsmittel ein Teil zur Kopplung mit einem Teil des Kettenglieds und ein Teil zur Kopplung mit der Verbindungseinrichtung umfasst. Diese Konstruktion verwendet ebenfalls sonderangefertigte Kettenräder, analog zu den oben beschriebenen. Daher überwindet diese Konstruktion die oben angeführten Nachteile nicht.

### ZUSAMMENFASSUNG DER ERFINDUNG

Die Aufgabe der vorliegenden Erfindung besteht somit darin, eine Vorrichtung zur Bildung eines Rundballens aus gemähtem pflanzlichem Gut bereitzustellen, die über einen hohen Qualitätsstandard, Zuverlässigkeit und Langlebigkeit verfügt, und die Standardbaugruppen und -teile ohne besondere zusätzliche Bearbeitung verwendet. Die Vorrichtung soll außerdem eine Senkung des Geräuschpegels beim Betrieb und eine leichtere Reinigung der Teile des Pressmechanismus von Pflanzenteilchen gewährleisten sowie einen früheren Beginn des Vorgangs der Rundballenbildung ermöglichen, damit der erforderliche Dichtegradient über den Durchmesser des fertigen Rundballens aus pflanzlichem Gut und die erforderliche gleichmäßige geometrische Form des Rundballens erreicht werden. Außerdem sollen mit der Vorrichtung die Verluste an gemähtem pflanzlichen Gut, besonders des kleinteiligen Anteils, verringert werden.

Die gestellte Aufgabe wird gelöst mit einer erfindungsgemäßen Vorrichtung zur Bildung eines Rundballens aus gemähtem pflanzlichem Gut, enthaltend übliche Mittel zur Bildung einer Bahn aus bearbeitetem Gut sowie ein Mittel zur Bildung eines Rundballens aus der Bahn (Pressmechanismus), wobei letzteres wenigstens ein Paar paralleler Endlosketten umfasst, von denen jede ein aus einem Axialteil und einem Verbindungsteil ausgebildetes Kettenglied enthält und mit einem Bewegungsmittel und einem eine Führung und ein Fördermittel enthaltenden Mittel zur Vorgabe der Bewegungsbahn in Wirkzusammenhang bringbar angeordnet ist, wobei das Mittel zur Bildung eines Rundballens weiter ein zwischen den Ketten des Kettenpaars angeordnetes Betätigungsglied enthält. Das Betätigungsglied ist mit einander gegenüberliegenden Abschnitten der Ketten des Kettenpaars über eine Verbindungseinrichtung verbunden, welche ein Gehäuse mit einem Mittel zur Kopplung mit einem Teil des Kettenglieds enthält. Das Bewegungsmittel umfasst ein Teil zur Kopplung mit einem Teil des Kettenglieds und ein Teil zur Kopplung mit der Verbindungseinrichtung, wobei die Verbindungseinrichtung so ausgebildet ist, dass sie zwei benachbarte Kettenglieder wenigstens von der Seite der Kette her, die der mit dem Bewegungsmittel zusammenwirkenden Seite der Kette gegenüberliegt, übergreifen kann. Das Mittel zur Kopplung der Verbindungseinrichtung mit einem Teil des Kettenglieds ist in Form zweier Öffnungen zur Aufnahme der Axialteile und wenigstens einer Nut zur Aufnahme der Verbindungsteile, welche jedes der beiden genannten benachbarten Kettenglieder mit seinem jeweils zweiten benachbarten Kettenglied verbinden, ausgebildet und ist im Gehäuse der Verbindungseinrichtung so angeordnet, daß die radiale Lage relativ zum entsprechenden Axialteil der Verbindungsteile, welche jedes der beiden genannten benachbarten Kettenglieder mit seinem jeweils zweiten benachbarten Kettenglied verbinden, unabhängig änderbar ist. Die Form der Mittel zum Koppeln des Mittels zur Vorgabe der Bewegung mit der Verbindungseinrichtung entspricht der Form der Teile zur Kopplung mit dem Teil des Kettenglieds. Das Fördermittel ist als axiales Element ausgebildet und an der Verbindungseinrichtung angeordnet.

Gemäß einer bevorzugten Ausbildungsform der Vorrichtung zur Bildung eines Rundballens aus gemähtem pflanzlichen Gut hat das Gehäuse der Verbindungseinrichtung ein U-förmiges Profil. Diese Ausbildung des Gehäuses der Verbindungseinrichtung gestattet dem Kettenrad ein ungehindertes Passieren des Kettenabschnitts, an dem die Verbindungseinrichtung angeordnet ist. Dabei wird dank Beibehaltung der standardmäßigen Ausführung des Kettenrads und Verwendung standardmäßiger Kettenteile der Geräuschpegel beträchtlich gesenkt. Außerdem können durch diese Ausbildung des Gehäuses der Verbindungseinrichtung in der Konstruktion des Preßmechanismus kleinere Kettenräder verwendet und gegebenenfalls die Abstände der Betätigungsglieder zwischen den Ketten des Kettenpaars ohne Auswechseln der Kettenräder verändert werden.

Bevorzugt ist auch eine Ausbildungsform der Vorrichtung, bei der wenigstens eine Verbindungseinrichtung mit wenigstens einem Mittel zur mechanischen Reinigung des Mittels zur Vorgabe der Bewegung versehen ist, wodurch ein Zusetzen des letzteren durch Teile des pflanzlichen Guts während des Betriebs verhindert wird.

In diesem Falle ist in der Oberfläche der im Gehäuse der Verbindungseinrichtung ausgebildeten Nut bevorzugt eine Ausnehmung ausgebildet, in der das Mittel zur mechanischen Reinigung bevorzugt gegen Verschiebung durch die Teile zur Verbindung mit dem benachbarten Kettenglied fixierbar angeordnet ist. Eine solche Art der Anbringung und Befestigung der Mittel zur mechanischen Reinigung - im Weiteren "Reiniger" genannt - ist in hohem Grade sicher, erfordert nicht die Verwendung zusätzlicher Befestigungselemente und vereinfacht die Konstruktion der Vorrichtung sowie ihre Wartung während des Betriebs. Die "Reiniger" können jedoch auch auf beliebige andere, dem Fachmann bekannte Weise unter Verwendung standardmäßiger Befestigungsmittel befestigt sein. Dabei können die "Reiniger" am Gehäuse aller Verbindungseinrichtungen oder mehrerer Verbindungseinrichtungen angebracht sein, was zu einer beträchtlich höheren Wirksamkeit der Reinigung der Vorrichtung insgesamt während des Betriebs führt.

Gegebenfalls können die Achse des Betätigungsglieds und/oder die Achse des axialen Elements des Mittels zur Vorgabe der Bewegungsbahn in verschiedenen Ebenen und außerhalb der Ebene der Achse der Kettenpaare angeordnet sein. Dies erhöht weiter die Zahl der möglichen Varianten der wechselseitigen Anordnung der Bestandteile der Vorrichtung, um das Funktionsniveau des Pressmechanismus zu anzuheben, und ermöglicht eine leicht zugängliche und für Reparatur und Wartung bequeme Anordnung.

Zweckmäßig kann in einigen Ausbildungsformen der Vorrichtung zur Bildung eines Rundballens aus gemähtem pflanzlichen Gut wenigstens zwischen zwei Verbindungseinrichtungen, die jeweils mit einem Betätigungsglied verbunden sind, zusätzlich wenigstens eine autonome Verbindungseinrichtung angeordnet sein, die nicht mit einem Betätigungsglied und dem Mittel zur Vorgabe der Bewegungsbahn verbunden ist und die mit einem Mittel zur mechanischen Reinigung versehen ist. Betrachtet man eine Ausführungsvariante, bei der die Abstände zwischen den an der Kette angeordneten Betätigungsgliedern so gewählt sind, dass sie der halben Länge der Umfangslinie des Kettenrads entsprechen, so werden die an den Verbindungseinrichtungen angebrachten "Reiniger" effektiv nur bestimmte, an der Länge der Umfangslinie gemessen geringe Abschnitte von Pflanzenresten säubern können (an den Stellen, an denen ein Kettenabschnitt mit einer daran angebrachten, mit "Reinigern" versehenen Verbindungseinrichtung das Kettenrad passiert). Die übrigen Teile der Kettenräder werden sich wie bisher zusetzen. Daher wird die Anbringung zusätzlicher, an autonomen Verbindungseinrichtungen angebrachten "Reinigern" zweckmäßig sein, wobei die autonomen Verbindungseinrichtungen zwischen mit Betätigungsgliedern verbundenen Verbindungseinrichtungen angeordnet sind. In diesem Falle tragen solche Verbindungseinrichtungen keine Betätigungsglieder, d.h., sie ändern die vorgegebenen Prozessparameter nicht. Die Anzahl der zusätzlichen "Reiniger" bzw. der zusätzlichen Verbindungseinrichtungen wird ausgehend von technischen Daten von Teilen der Vorrichtung bestimmt, als da sind: Abstände zwischen den Betätigungsgliedern, Durchmesser der Kettenräder, Größe und Anzahl der an einer Verbindungseinrichtung angebrachten Reiniger, Qualität des gepressten Guts (Heu, Stroh) usw. Im Weiteren sind einige mögliche Beispiele der Wahl von Zahl und Anordnung der zusätzlichen "Reiniger" ausführlicher beschrieben und erläutert.

Die neuartige und für den Fachmann nicht offensichtliche technische Lösung wesentlicher Teile der erfindungsgemäßen Vorrichtung zur Bildung eines Rundballens aus gemähtem pflanzlichen Gut führt somit in allen möglichen Ausbildungsformen zum Erreichen aller oben angeführten technischen Effekte: hohe Zuverlässigkeit und Langlebigkeit, Vereinfachung von Montage und Reparatur, Verwendung eines größeren Anteils standardmäßiger Baugruppen und Teile ohne besondere zusätzliche Bearbeitung, beträchtliche Senkung des Geräuschpegels beim Betrieb, verbesserte Reinigung der Teile des Pressmechanismus von Pflanzenteilen, Erreichen des erforderlichen Dichtegradienten über den Durchmesser des fertigen Rundballens aus pflanzlichem Gut und Erreichen der erforderlichen gleichmäßigen geometrischen Form des Rundballens, Senkung der Verluste an gemähtem pflanzlichen Gut, besonders seines kleinteiligen Anteils.

### KURZBESCHREIBUNG DER ZEICHNUNGEN

Die Vorzüge und Vorteile der erfindungsgemäßen Vorrichtung zur Bildung eines Rundballens aus gemähtem pflanzlichem Gut sind im Folgenden ausführlicher beschrieben und unter Berücksichtigung möglicher bevorzugter, den Schutzumfang jedoch nicht einschränkender Ausbildungsformen der Vorrichtung insgesamt und ihrer wichtigsten Bestandteile unter Bezugnahme auf die beiliegenden Zeichnungen verdeutlicht. Die Zeichnungen zeigen:
- Figur 1 -: schematische Darstellung einer Ansicht einer bevorzugten Ausbil- dungsform der Vorrichtung zur Bildung eines Rundballens aus ge- mähtem pflanzlichen Gut;
- Figur 2 -: schematische Darstellung des Prozesses der Bildung des Rundbal- lens aus pflanzlichem Gut;
- Figur 3 -: bevorzugte Ausbildungsform der Verbindungseinrichung, des Betätigungsglieds und der Achse des Fördermittels des Mittels zur Vorgabe der Bewegungsbahn;
- Figur 4 -: bevorzugte Ausbildungsform der Verbindung der Verbindungseinrichtung mit dem Betätigungsglied an der Kette und mit dem Fördermittel des Mittels zur Vorgabe der Bewegungsbahn;
- Figur 5 -: bevorzugte Ausbildungsform der Anordnung der Verbindungseinrichtung mit den "Reinigern" an der Kette;
- Figur 6 -: Teilschnitt entlang der Linie A-A des Gehäuses der Verbindungseinrichtung mit Reiniger.

### BESCHREIBUNG DER VORRICHTUNG IN STATISCHEM ZUSTAND

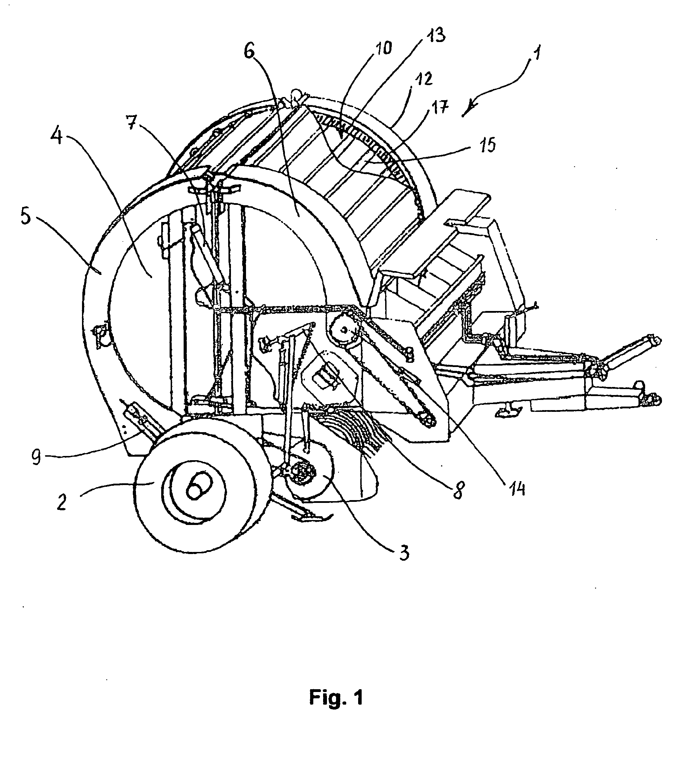

Figur 1 zeigt schematisch eine Gesamtansicht einer bevorzugten Ausbildungsform der Vorrichtung zur Bildung eines Rundballens aus gemähtem pflanzlichem Gut, ausgebildet als Aufsammelpresse 1, die mit einem selbstfahrenden Fahrzeug, beispielsweise einem Rädertraktor, verbindbar ist. Die Aufsammelpresse 1 umfasst eine Basis 2 mit einem Räderfahrwerk, auf dem ein Aufsammler 3 und eine Presskammer 4 angeordnet sind.

Die Aufsammeleinrichtung 3 und ihre Funktion enthalten keine neuen Merkmale, sie sind dem Fachmann bekannt und sind im Rahmen dieser Anmeldung lediglich in allgemeiner Weise ohne Bezug auf die Zeichnungen beschrieben. So umfasst ein üblicher Aufsammler 3, der in dieser Ausbildungsform der erfindungsgemäßen Vorrichtung verwendet werden kann, insgesamt als wichtigste Teile einen Rotor mit speziellen Einrichtungen zur Aufnahme des gemähten Guts aus den Schwaden und einen Förderer, über den das aus den Schwaden aufgenommene pflanzliche Gut der Presskammer 4 zugeführt wird.

Die Presskammer 4 umfasst ein hinteres Teil 5 und ein vorderes Teil 6. Das hintere Teil 5 der Presskammer ist gelenkig mit dem vorderen Teil 6 verbunden und kann zur Entnahme des fertigen Ballens geöffnet werden. Die Entsperrung des hinteren Teils 5 der Presskammer 4 wird über einen Hydraulikzylinder 7 gesteuert. Der Prozess der Bildung des Rundballens aus dem gemähten pflanzlichen Gut wird durch einen Mechanismus 8 zur Steuerung der Pressdichte unterstützt, welcher mit einer Signalvorrichtung versehen ist (die Signalvorrichtung ist in den Zeichnungen nicht dargestellt, kann jedoch in der vorliegenden Ausbildungsform als spezielles Pult, das ein Signal vom Mechanismus 8 zur Steuerung der Pressdichte empfängt, dargestellt sein).

Am hinteren Teil 5 der Presskammer 4 ist auch ein Spannwerk 9 für den im Weiteren als Pressmechanismus 10 bezeichneten Pressförderer angebracht.

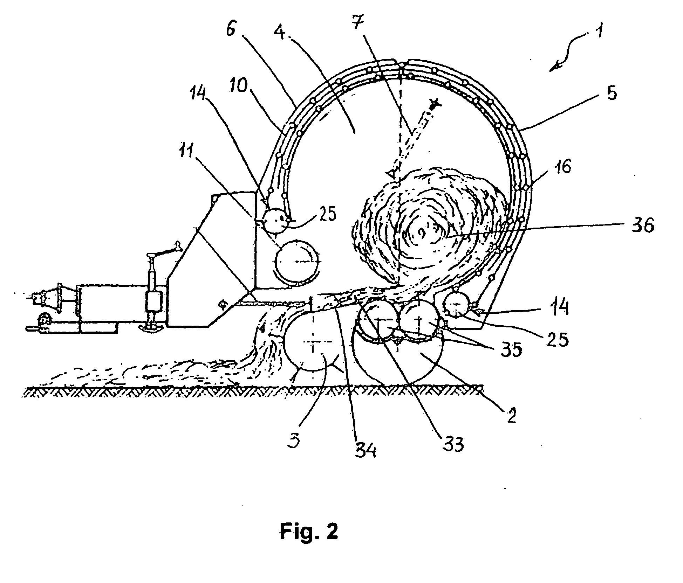

Im vorderen Teil 6 der Presskammer ist eine obere Walze (11) angebracht (s. Figur 2), die mit dem Mechanismus 8 zur Steuerung der Pressdichte verbunden ist. An den Wänden 12 der Presskammer 4 sind Führungen 13 angeordnet, die die Bewegungsbahn des Pressmechanismus 10 vorgeben. Letzterer stellt eine der wichtigsten Baugruppen der Pick-up-Presse 1 dar. Er dient zur Bildung des Rundballens und besteht aus zwei Zugketten, die über ein Zahnradgetriebe 14 angetrieben werden, wobei zwischen den Ketten die als Querwalzen 15 ausgebildeten Betätigungsglieder angeordnet sind. Koaxial zu den Enden der Querwalzen sind an den Außenseiten der Ketten die axialen Elemente des Mittels zur Vorgabe der Bewegungsbahn angebracht, in dieser Ausbildungsform als Rollen 16 ausgeführt, die in den Führungen 13 laufen.

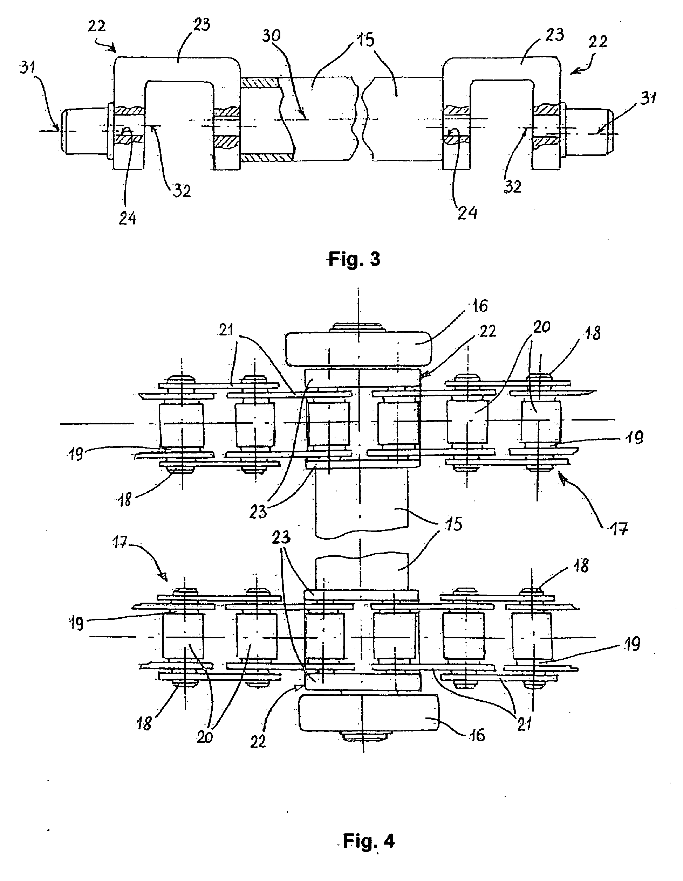

Die Figuren 3 und 4 zeigen detaillierter einige bevorzugte Ausbildungsformen der Konstruktion des Pressmechanismus 10. Im Unterschied zur traditionellen Ausbildung des Pressmechanismus 10 ist in der erfindungsgemäßen Vorrichtung eine Kette 17 ausschließlich mit Gliedern standardmäßiger Ausführung verwendet, die aus Axialteilen 18, Hülsen 19, Rollen 20 und in Form von Platten 21 ausgebildeten Verbindungselementen bestehen. Dabei sind die Walzen 15 jeweils über eine Verbindungseinrichtung 22 an den parallelen Ketten 17 des Kettenpaars befestigt.

Die Verbindungseinrichtung 22 enthält ein Gehäuse 23, im Falle der vorliegenden Ausbildungsform mit U-förmigem Profil, sowie Mittel zur Kopplung mit den Teilen des Glieds der Kette 17, wobei diese Kopplungsmittel gemäß dieser Ausbildungsform als Durchgangsbohrungen 24 ausgeführt sind, die in gegenüberliegenden Wänden des Gehäuses 23 ausgebildet sind. Jede Verbindungseinrichtung 22 ist so an der Kette 17 angebracht, dass sie zwei benachbarte Kettenglieder von der Seite der Kette aus übergreift, die der Seite, mit der die Kette 17 mit dem Bewegungsmittel, das in diesem Falle als standardmäßiges Zahnrad 25 (das keine speziellen Ausnehmungen aufweist) ausgebildet ist, gegenüberliegt. Die Platten 21, Hülsen 19 und Rollen 20 benachbarter Glieder der Kette 17 sind zwischen gegenüberliegenden Wänden des Gehäuses 23 der Verbindungseinrichtung 22 angeordnet. Die Stelle der Ausbildung der Bohrung 24 in den Wänden des Gehäuses 23 der Verbindungseinrichtung 22 ist so gewählt, dass bei an benachbarten Gliedern der Kette 17 angebrachter Verbindungseinrichtung 22 sich die Platten 21 der benachbarten Kettenglieder unabhängig um die entsprechenden Axialteile 18 drehen können. Die beschriebene Ausbildung der Verbindungseinrichtung 22 und ihre besondere Anbringung an der Kette 17 gestatten ein unbehindertes Überwinden des Zahnrades 25 über die gesamte Länge der Kette 17 und schließen die verschiedenartigen Störungen und ein Verkeilen der Teile der Kette 17 beim Passieren des Zahnrades 25 vollständig aus.

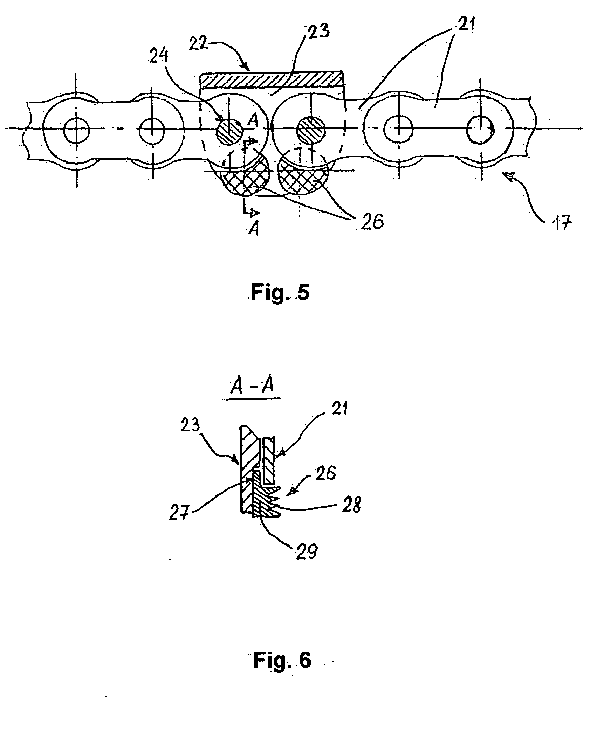

Die Figuren 5 und 6 zeigen eine bevorzugte Ausbildungsform der Mittel zur mechanischen Reinigung des Zahnrades 25, die hier als paarweise "Reiniger" 26 ausgeführt sind, die in im Gehäuse 23 der Verbindungseinrichtung 22 ausgebildeten Ausnehmungen 27 angeordnet sind. Die Ausnehmungen 27 sind an der dem Zahnrad 25 zugewandten Seite des Gehäuses 23 der Verbindungseinrichtung 22 ausgebildet, während die "Reiniger" 26 so in den Ausnehmungen 27 angeordnet sind, dass ihre Reinigungselemente 28 über die Oberfläche des Gehäuses 23 der Verbindungseinrichtung 22 hervorragen und mit minimalem Spiel zum Zahnrad 25 angeordet sind, wenn ein Abschnitt der Kette 17, an dem eine Verbindungseinrichtung 22 mit "Reingern " 26 angeordnet ist, das Zahnrad 25 passiert.

Die Befestigung der "Reiniger" 26 am Gehäuse 23 der Verbindungseinrichtung 22 erfordert gemäß dieser Ausbildungsform keinerlei zusätzliche Befestigungselemente und geschieht wie folgt:
- bei der Montage des Pressmechanismus 10 werden die "Reiniger" 26 in die im Gehäuse 23 der Verbindungseinrichtung 22 ausgebildete Ausnehmung 27 (deren Form und Größe der Form des Reinigers 26 entspricht) eingesetzt;
- die Verbindungseinrichtung 22 wird durch Ausrichten der axialen Öffnungen der Platten 21 zweier benachbarter Kettenglieder und der entsprechenden Öffnungen 24 des Gehäuses 23 der Verbindungseinrichtung 22 mit den Axialteilen 18 der entsprechenden zwei benachbarten Kettenglieder an der Kette 17 montiert;
- dabei "überdecken" die Platten 21 der Kettenglieder gleichsam einen bestimmten Bereich 29 des "Reinigers" 26, in dem keine Reinigungselemente 28 ausgebildet sind. Form und Größe des Bereichs 29 sind so gewählt, dass ein ungehindertes Verändern der radialen Lage der Platten 21 der beiden benachbarten Kettenglieder zum "Reiniger" 26 möglich ist.

Dabei sind im Allgemeinen die geometrische Form des "Reinigers" 26 und folglich auch der Ausnehmung 27, sowie die Anzahl der am Gehäuse 23 einer der Verbindungseinrichtungen 22 angebrachten "Reiniger" 26 für die vorliegende Anmeldung nicht wesentlich und können beliebig gewählt werden. Im in Figur 5 dargestellten Ausbildungsbeispiel ist eine Verbindungseinrichtung 22 symmetrisch beidseitig mit zwei Paaren "Reinigern" 26 mit runder Form versehen. Es sind jedoch auch Ausbildungsformen der Verbindungseinrichtung 22 möglich, bei denen letztere beispielsweise mit zwei rechteckigen "Reinigern" 26 versehen ist, usw.

Damit alle Winkelbereiche des Zahnrades 25 gereinigt werden können, sind an der Kette 17 außer den Verbindungsvorrichtugen 22, an denen die Walzen 15 und die "Reiniger" 26 angeordnet sind, auch autonome Verbindungseinrichtungen 22 vorgesehen, an denen nur "Reiniger" 26 angeordnet sind. Dank der Konstruktion der Verbindungseinrichtung 22, die ein ungehindertes Passieren des Zahnrades 25 durch den Abschnitt der Kette 17, an dem eine Verbindungseinrichtung 22 angebracht ist, ermöglicht, kann die nur mit "Reinigern" 26 versehene Verbindungseinrichtung 22 an jedem beliebigen Abschnitt der Kette 17 angeordnet sein, ohne dass hierbei die Einhaltung bestimmter Abstände erforderlich wäre. Dabei entsteht nicht die Gefahr von Funktionsstörungen des Kettengetriebes. Die Anzahl der Verbindungseinrichtungen 22 mit daran angebrachten Walzen 15 und "Reinigern" 26 und der autonomen Verbindungseinrichtungen 22, an denen lediglich "Reiniger" 26 angebracht sind, sowie das Schema, nach dem diese an der Kette 17 entlang verteilt sind, sind für die vorliegende Anmeldung nicht wesentlich und können in der Praxis ohne Schwierigkeit durch den Fachmann unter Berücksichtigung des konkreten Typs der Aufsammelpresse 1 insgesamt gewählt werden.

Wichtig für ein breiteres Spektrum an möglichen Modifikationen der erfindungsgemäßen Vorrichtungen zur Bildung eines Rundballens aus gemähtem pflanzlichen Gut und für breitere funktionelle Möglichkeiten des Pressmechanismus ist die Möglichkeit der Anordnung der Achsen der Betätigungsglieder - d.h. der Walzen 15 im Rahmen des hier besprochenen Ausbildungsbeispiels - und/ oder der Achse des axialen Elements des Mittels zur Vorgabe der Bewegung - d.h. der Rollen 16 im Rahmen des hier besprochenen Ausbildungsbeispiels - in verschiedenen Ebenen und auch außerhalb der Ebenen der Achsen des Kettenpaars. Eine der möglichen konkreten Ausbildungsformen ist in Figur 3 dargestellt, aus der deutlich hervorgeht, dass die Achse 30 der Walze 15 oberhalb der Ebene der Achsen 32 des Kettenpaars 17 liegt und die Achse 31 der Rolle 16 unterhalb.

### FUNKTIONSBESCHREIBUNG DER VORRICHTUNG

Im Folgenden wird unter Bezugnahme auf die Figuren 1 - 6 die Funktion der erfindungsgemäßen Vorrichtung zur Bildung eines Rundballens aus gemähtem pflanzlichen Gut beschrieben.

Der Prozess der Bildung eines Rundballens aus gemähtem pflanzlichen Gut ist schematisch in groben Zügen in Figur 2 dargestellt.

Die Aufsammelpresse 1 wird mit einem selbstfahrenden Fahrzeug (zeichnerisch nicht dargestellt) verbunden. Ist das selbstfahrende Fahrzeug und folglich auch die Aufsammelpresse 1 in Bewegung, so nehmen spezielle, am Rotor des Aufsammlers 2 angeordnete Einrichtungen die Bahn 33 des gemähten pflanzlichen Guts aus den Schwaden auf und geben sie an den Förderer 34 weiter, mit dem die Bahn 33 der Presskammer 4 zugeführt wird. Die Bahn 33 setzt die Vorwärtsbewegung auf der durch das Laufband 34 vorgegebenen Bahn fort, läuft über die im unteren Teil der Presskammer 4 angeordneten Stützrollen 35 und erreicht den Betätigungsraum des Pressmechanismus 10. Die Bewegungsbahn des Pressmechanismus 10 wird durch die an den Wänden 12 der Presskammer 4 ausgebildeten Führungen 13 vorgegeben, in denen die an den Außenseiten der Ketten 17 des Kettenpaars angebrachten Rollen 16 laufen. Der Pressmechanismus 10 wird über die standardmäßig ausgebildeten Zahnräder 25 angetrieben. Letztere werden dabei während des Betriebs ständig durch die an den Verbindungseinrichtungen 22 angebrachten "Reiniger" 26 gereinigt. Wenn eine Verbindungseinrichtung 22 mit daran angebrachten "Reinigern" 26 ein Zahnrad 25 passiert, entfernen die Reinigungselemente 28 Reste des pflanzlichen Guts, die sich am Zahnrad 25 anlagern. So setzt sich das Zahnrad 25 nicht zu, und es kommt nicht zu Betriebsstörungen des Pressmechanismus 10 auf Grund eines Verkeilens der Ketten 17 beim Passieren des Zahnrades 25.

Wie oben bereits ausführlich beschrieben wurde, garantiert die Ausbildung der Verbindungseinrichtungen 22, die zur Befestigung der Walzen 15 an den Ketten 17 des Kettenpaars dienen, und die Ausbildung der Rollen 16 und der "Reiniger" 26 in Verbindung mit der standardmäßigen Ausbildung des Zahnrads 25 einen störungsfreien Betrieb des Kettengetriebes insgesamt. Dies ist vor allem dadurch zu erklären, dass das standardmäßig ausgebildete Zahnrad 25 nur mit standardmäßig ausgebildeten Teilen der Kette 17 kontaktiert, und die korrekte Berechnung der Teile des Kettengetriebes, die der Fachmann ohne Weiteres vornehmen kann, gewährleistet ein zuverlässiges Funktioneren des Getriebes.

Wenn die Bahn 33 den Betätigungsraum des Pressmechanismus 10 erreicht, tritt sie mit einer der Walzen 15 in Kontakt, und unter Einwirkung der verschieden gerichteten Kräfte erfolgt ein "Brechen" der Bahn 33 und beginnt der Prozess der Bildung des Rundballens 36. Im beschriebenen Ausbildungsbeispiel der Vorrichtung zur Bildung eines Pressballens aus gemähtem pflanzlichen Gut kann die Walze 15 dank der Lage ihrer Achse 30 außerhalb der Ebene der Achsen 32 der Ketten 17 tiefer in die Bahn 33 des gemähten pflanzlichen Guts eingreifen und den Prozess der Bildung des Rundballens 36 früher beginnen.

Der Rundballen 36 aus gemähtem pflanzlichen Gut stützt sich auf den Stützrollen 35 ab und wächst im Durchmesser. Bei seiner Bildung erfolgt mit jeder weiteren aufgewickelten Lage der Bahn 33 ein "Nachpressen" der vorher aufgewickelten Lagen der Bahn 33. Sobald die vorgegebene Dichte erreicht ist, wird an das Signalpult ein Signal zur Beendigung des Pressvorgangs abgegeben. Das Signal kann ein akustisches Signal oder ein optisches Signal darstellen. Es kann auch die Möglichkeit vorgesehen sein, am Signalpult von akustischem Signal auf optisches Signal bzw. umgekehrt umzuschalten.

Nach beendeter Bildung des Rundballens 36 wird dieser gebunden; dieser Vorgang wird im Rahmen dieser Anmeldung nicht erörtert, kann aber unter Berücksichtigung der allgemein bekannten Konstruktionen von Standard-Bindevorrichtungen vom Fachmann leicht durchgeführt werden.

Zur Entnahme des gebundenen Rundballens 36 aus der Presskammer wird deren hinteres Teil 5 geöffnet, wozu der Hydraulikzylinder 7 betätigt wird. Wie bereits erwähnt wurde, ist das hintere Teil 5 der Presskammer 4 gelenkig mit dem vorderen Teil 6 verbunden und kann mit Hilfe des Hydraulikzylinders 7 angehoben werden, wonach der fertige Ballen aus der Presskammer 4 ausgestoßen wird.

Weiter wird mit Hilfe des Hydraulikzylinders 7 das hintere Teil 5 der Presskammer 4 geschlossen, und es beginnt ein neuer Betriebszyklus der Bildung eines weiteren Rundballens 36 aus gemähtem pflanzlichen Gut, dessen anschließenden Bindens und seiner Entnahme aus der Presskammer.

Das oben beschriebene Ausbildungsbeispiel der erfindungsgemäßen Vorrichtung zur Bildung eines Rundballens aus gemähtem pflanzlichen Gut umfasst nur eine der bevorzugten Kombinationsmöglichkeiten konkreter Ausführungen der Unterscheidungsmerkmale der Erfindung, schließt jedoch die Ausbildung der Vorrichtung mit anderen Kombinationen anderer konkreter Ausführungen der Merkmale nicht aus. Dabei gewährleisten alle möglichen Kombinationen den erfindungsgemäßen technischen Effekt.

## Patentansprüche

1. Vorrichtung zur Bildung eines Rundballens aus gemähtem pflanzlichem Gut, enthaltend Mittel zur Bildung einer Bahn aus bearbeitetem Gut sowie Mittel zur Bildung eines Rundballens aus der Bahn, umfassend wenigstens ein Paar paralleler Endlosketten, von denen jede ein aus einem Axialteil und einem Verbindungsteil ausgebildetes Kettenglied enthält und mit einem Bewegungsmittel und einem eine Führung und ein Fördermittel enthaltenden Mittel zur Vorgabe der Bewegungsbahn in Wirkzusammenhang bringbar angeordnet ist, und das Mittel zur Bildung eines Rundballens weiter ein zwischen den Ketten des Kettenpaars angeordnetes Betätigungsglied enthält, das über eine ein Gehäuse mit einem Mittel zur Kopplung mit einem Teil des Kettenglieds enthaltende Verbindungseinrichtung mit einander gegenüberliegenden Abschnitten der Ketten des Kettenpaars verbunden ist, und wobei das Bewegungsmittel ein Teil zur Kopplung mit einem Teil des Kettenglieds und ein Teil zur Kopplung mit der Verbindungseinrichtung umfasst, **dadurch gekennzeichnet, dass** die Verbindungseinrichtung so ausgebildet ist, dass sie zwei benachbarte Kettenglieder wenigstens von der Seite der Kette her, die der mit dem Bewegungsmittel zusammenwirkenden Seite der Kette gegenüberliegt, übergreifen kann; das Mittel zur Kopplung der Verbindungseinrichtung mit einem Teil des Kettenglieds in Form zweier Öffnungen zur Aufnahme der Axialteile und wenigstens einer Nut zur Aufnahme der Verbindungsteile, welche jedes der beiden genannten benachbarten Kettenglieder mit seinem jeweils zweiten benachbarten Kettenglied verbinden, ausgebildet ist und im Gehäuse der Verbindungseinrichtung so angeordnet ist, daß die radiale Lage relativ zum entsprechenden Axialteil der Verbindungsteile, welche jedes der beiden genannten benachbarten Kettenglieder mit seinem jeweils zweiten benachbarten Kettenglied verbinden, unabhängig änderbar ist; die Form der Mittel zum Koppeln des Mittels zur Vorgabe der Bewegung mit der Verbindungseinrichtung der Form der Teile zur Kopplung mit dem Teil des Kettenglieds entspricht; und das Fördermittel als axiales Element ausgebildet und an der Verbindungseinrichtung angeordnet ist.

2. Vorrichtung nach Anspruch 1, **dadurch gekennzeichnet, dass** das Gehäuse der Verbindungseinrichtung ein U-förmiges Profil hat.

3. Vorrichtung nach einem der Ansprüche 1 oder 2, **dadurch gekennzeichnet, dass** die Verbindungseinrichtung mit wenigstens einem Mittel zur mechanischen Reinigung des Mittels zur Vorgabe der Bewegung versehen ist.

4. Vorrichtung nach Anspruch 3, **dadurch gekennzeichnet, dass** in der Oberfläche der im Gehäuse der Verbindungseinrichtung ausgebildeten Nut eine Ausnehmung ausgebildet ist, in der das Mittel zur mechanischen Reinigung angeordnet ist.

5. Vorrichtung nach einem der Ansprüche 3 und 4, **dadurch gekennzeichnet, dass** das Mittel zur mechanischen Reinigung gegen Verschiebung durch die Verbindungsteile zur Verbindung mit dem benachbarten Kettenglied fixierbar angeordnet ist.

6. Vorrichtung nach einem der Ansprüche 1 - 5, **dadurch gekennzeichnet, dass** die Achse des Betätigungsglieds und/oder die Achse des axialen Elements des Mittels zur Vorgabe der Bewegungsbahn in verschiedenen Ebenen und außerhalb der Ebene der Achse der Kettenpaare angeordnet sind.

7. Vorrichtung nach einem der Ansprüche 1 - 6, **dadurch gekennzeichnet, dass** wenigstens zwischen zwei benachbarten Verbindungseinrichtungen, die jeweils mit einem Betätigungsglied verbunden sind, zusätzlich wenigstens eine Verbindungseinrichtung angeordnet ist, die nicht mit einem Betätigungsglied und dem Mittel zur Vorgabe der Bewegungsbahn verbunden ist und die mit einem Mittel zur mechanischen Reinigung versehen ist.

## Claims

1. Apparatus for forming a round bale of mowed plant matter, containing means for forming a web of processed matter and means for forming a round bale from the web, comprising at least one pair of parallel endless chains, each of which contains a chain link constructed from an axial part and a connecting part and is arranged such that it can be brought into operative relationship with a movement means and a means containing a guide and a means of conveyance for determining the movement track, and the means for forming a round bale further contains an actuating member arranged between the chains of the chain pair, said actuating member being connected to opposite lying sections of the chains of the chain pair via a connecting device containing a housing with a means for coupling to a part of the chain link, and wherein the movement means comprises a part for coupling to a part of the chain link and a part for coupling to the connecting device, **characterized in that** the connecting device is formed such that it can overlap two adjacent chain links at least from the side of the chain that is arranged opposite to the side of the chain cooperating with the movement means; the means for coupling the connecting device to a part of the chain link is formed in the form of two openings for receiving the axial parts and at least one groove for receiving the connecting parts which connect each of the two aforementioned adjacent chain links to its respectively second adjacent chain link, and is arranged in the housing of the connecting device such that the radial position is independently changeable relative to the corresponding axial part of the connecting parts which connect each of the two aforementioned adjacent chain links to its respectively second adjacent chain link; the shape of the means for coupling the means for determining the movement to the connecting device corresponds to the shape of the parts for coupling to the part of the chain link; and the means of conveyance is formed as an axial element and is arranged on the connecting device.

2. Apparatus according to Claim 1, **characterized in that** the housing of the connecting device has a U-shaped profile.

3. Apparatus according to one of Claims 1 or 2, **characterized in that** the connecting device is provided with at least one means for mechanical cleaning of the means for determining the movement.

4. Apparatus according to Claim 3, **characterized in that** a recess is formed in the surface of the groove constructed in the housing of the connecting device, with the means for mechanical cleaning being arranged in said recess.

5. Apparatus according to one of Claims 3 and 4, **characterized in that** the means for mechanical cleaning is fixably arranged against displacement by the connecting parts for connecting to the adjacent chain link.

6. Apparatus according to one of Claims 1 to 5, **characterized in that** the axis of the actuating member and/or the axis of the axial element of the means for determining the movement track are arranged in different planes and outside the plane of the axis of the chain pairs.

7. Apparatus according to one of Claims 1 to 6, **characterized in that** at least one connecting device which is not connected to an actuating member and the means for determining the movement track and which is provided with a means for mechanical cleaning is additionally arranged at least between two adjacent connecting devices which are each connected to an actuating member.

## Revendications

1. Dispositif pour former un ballot rond à partir de produit végétal fauché, contenant des moyens pour former une bande à base de produit traité et des moyens pour former un ballot rond à partir de la bande, comprenant au moins une paire de chaînes sans fin parallèles, dont chacune contient un maillon de chaîne formé d'une partie axiale et une partie de liaison et disposé de façon à pouvoir être amené en liaison active avec un moyen de déplacement et un moyen contenant un guide et un moyen de transport pour la spécification de la bande de déplacement, et le moyen pour former un ballot rond contenant également un élément d'actionnement disposé entre les chaînes de la paire de chaînes, qui est relié au moyen d'un dispositif de liaison contenant un boîtier avec un moyen pour l'accouplement avec une partie du maillon de chaîne à des parties se faisant face des chaînes de la paire de chaînes, et le moyen de déplacement comportant une partie pour l'accouplement avec une partie du maillon de chaîne et une partie pour l'accouplement avec le dispositif de liaison, **caractérisé en ce que** le dispositif de liaison est conçu de telle sorte qu'il peut recouvrir deux maillons de chaîne voisins au moins à partir du côté de la chaîne qui fait face au côté de la chaîne coopérant avec le moyen de déplacement, le moyen pour l'accouplement du dispositif de liaison avec une partie du maillon de chaîne étant conçu sous la forme de deux ouvertures pour le logement des parties axiales et d'au moins une rainure pour le logement des parties de liaison, qui relie chacun des deux maillons de chaîne voisins cités à son second maillon de chaîne voisin respectif, et étant disposé dans le boîtier du dispositif de liaison de telle sorte que la position radiale par rapport à la partie axiale correspondante des parties de liaison, qui relient chacun des deux maillons de chaîne voisins cités à son second maillon de chaîne voisin respectif, peut être modifiée indépendamment, la forme des moyens pour l'accouplement du moyen pour la spécification du déplacement avec le dispositif de liaison correspondant à la forme des parties pour l'accouplement avec la partie du maillon de chaîne, et le moyen de transport étant conçu comme élément axial et étant disposé sur le dispositif de liaison.

2. Dispositif selon la revendication 1, **caractérisé en ce que** le boîtier du dispositif de liaison a un profil en forme de U.

3. Dispositif selon l'une quelconque des revendications 1 ou 2, **caractérisé en ce que** le dispositif de liaison est doté d'au moins un moyen pour le nettoyage mécanique du moyen pour la spécification du déplacement.

4. Dispositif selon la revendication 3, **caractérisé en ce que** à la surface de la rainure réalisée dans le boîtier du dispositif de liaison est réalisé un creux dans lequel est disposé le moyen pour le nettoyage mécanique.

5. Dispositif selon l'une quelconque des revendications précédentes 3 et 4, **caractérisé en ce que** le moyen pour le nettoyage mécanique est disposé de façon à pouvoir être fixé contre le déplacement par les parties de liaison pour la liaison avec le maillon de chaîne voisin.

6. Dispositif selon l'une quelconque des revendications 1 à 5, **caractérisé en ce que** l'axe de l'élément d'actionnement et/ou l'axe de l'élément axial du moyen pour la spécification de la bande de déplacement est disposé à différents niveaux et à l'extérieur du niveau de l'axe des paires de chaînes.

7. Dispositif selon l'une quelconque des revendications 1 à 6, **caractérisé en ce que** au moins entre deux dispositifs de liaison voisins, qui sont reliés chacun à un élément d'actionnement, est disposé en supplément au moins un dispositif de liaison qui n'est pas relié à un élément d'actionnement et au moyen pour la spécification de la bande de déplacement et qui est doté d'un moyen pour le nettoyage mécanique.
